# EUROPÄISCHE PATENTSCHRIFT

(11) **EP 2 209 603 B1**
(45) Veröffentlichungstag und Bekanntmachung des Hinweises auf die Patenterteilung: **31.07.2013**
(21) Anmeldenummer: 08759079.0
(22) Anmeldetag: 06.06.2008
(51) Int. Cl.: B29C 47/12, B29C 33/36

(54) **KORRUGATOREINRICHTUNG MIT ENTFORMUNGSEINRICHTUNG**
CORRUGATOR DEVICE WITH A MOULD RELEASE DEVICE
APPAREIL À ONDULER POURVU D'UN DISPOSITIF DE DÉMOULAGE

(30) Priorität: 12.10.2007 DE 102007049655
(43) Veröffentlichungstag der Anmeldung: 28.07.2010
(73) Patentinhaber: UNICOR GmbH, 97437 Hassfurt (DE)
(72) Erfinder: FÖSEL Stefan, 96151 Breitbrunn (DE)
(74) Vertreter: Köhler, Walter
(86) Internationale Anmeldenummer: PCT/EP2008/004541
(87) Internationale Veröffentlichungsnummer: WO 2009/049691

(56) Entgegenhaltungen:
- US-A- 4 212 618
- US-A- 4 787 598
- US-A- 5 582 849

## Beschreibung

Die Erfindung geht aus von einer Korrugatoreinrichtung zum Ausformen von thermoplastischen Wellrohren aus einem aus einer Extrusionseinrichtung austretenden Kunststoffschmelzschlauch
mit in einer linearen Formstrecke umlaufend geführten Formbacken , die paarweise hintereinander angeordnet in der Formstrecke einen Formkanal bilden, wobei die Formbackenpaare aus linken und rechten Formbacken gebildet sind und zwischen sich die Bildung des Formkanals einen zylindrischen Formhohlraum umschließen;
mit Greifern um die Formbacken vom Ende der Formstrecke zum Anfang der Formstrecke zurückzuführen;
mit einer am Ende der Formstrecke angeordneten Entformungseinrichtung, die mindestens eine motorisch angetriebene Drehscheibe aufweist und mit den am Ende der Formstrecke angelangten Formbackenpaar zusammenwirkt, in- dem sie die Formbacken des Formbackenpaars auseinander bewegt.

Bei bekannten Korrugatoren der eingangs genannten Art ist zur Sicherstellung des Entformungsvorgangs eine Keileinrichtung erforderlich, auf der die Formbacken beim Auseinanderfahren in Eingriff kommen und abgleiten. Alternativ ist es erforderlich einen besonders starken Antriebsmotor zum Antrieb der Drehscheibe einzusetzen, da zumindest zu Beginn des Entformungsvorgangs zum Trennen der Formbacken des Formbackenpaares relativ große Kräfte erforderlich sind.

Der Erfindung liegt die Aufgabe zugrunde eine Korrugatoreinrichtung der eingangs genannten Art so weiterzubilden, daß der Entformungsvorgang sichergestellt wird, ohne daß ein besonders starker Antriebsmotor oder ein besonders komplexer konstruktiver Aufbau erforderlich wird.

Die US 4,212,618 beschreibt eine Korrugatoreinrichtung zum Ausformen thermoplastischer Wellrohre mit einer Formstrecke mit paarweise hintereinander geführten Formbacken mit Greifern, um die Formbacke vom Ende der Formstrecke zum Anfang der Formstrecke durchzuführen. Am Ende der Formstrecke ist eine Entformeinrichtung angeordnet, die eine feststehende Keileinrichtung aufweist, an der die Formbacken zum Ende der Formstrecke zwangsweise auseinander geführt werden.

Diese Aufgabe löst die Erfindung mit dem Gegenstand des Patentanspruchs 1.

Dadurch, daß auf der motorisch angetriebenen Drehscheibe ein erster Mitnehmer und ein zweiter Mitnehmer vorgesehen sind, die so angeordnet sind, daß der Abstand des ersten Mitnehmers zur zentralen Drehachse kleiner ist als der Abstand des zweiten Mitnehmers zur zentralen Drehachse, wird es möglich zu Beginn des Entformungsvorgangs den ersten Mitnehmer mit dem kleinen Hebelarm und anschließend den zweiten Mitnehmer mit dem großen Hebelarm auf den Formbacken einwirken zu lassen, so daß bei gleichem Antriebsmoment zu Beginn des Entformungsvorgangs eine besonders hohe Kraft zum Entformen übertragen wird.

Alternativ löst die Erfindung dieselbe Aufgabe mit dem Gegenstand des Patentanspruchs 2. Diese Lösung sieht vor, daß zwei motorisch angetriebene Drehscheiben vorgesehen sind, wobei die eine Drehscheiben von oben her und die andere Drehscheibe von unten her an dem zu entformenden Formbackenpaar im Bereich des Endes der Formstrecke einwirkt. Durch diese zwei jeweils motorisch angetriebenen Drehscheiben wird eine sichere Entformung erhalten, ohne daß ein besonders starker Antriebsmotor eingesetzt werden muß oder ein besonders komplexer konstruktiver Aufbau erforderlich ist.

Zur Unterstützung der Wirkung der motorisch angetriebenen Drehscheibeneinrichtung sind bei bevorzugten Ausführungen der Drehscheibeneinrichtung eine Keileinrichtung nachgeschaltet, die so ausgebildet und angeordnet ist, daß zwei symmetrisch angeordnete Keilflächen der Keileinrichtung mit den mit der Drehscheibe in Eingriff stehenden beiden Formbacken zusammenwirkt, indem jeder Formbacken an eine zugeordnete Keilfläche abgleitet.

Von besonderem Vorteil ist es eine Drehscheibe einzusetzen, die mit beiden Formbacken des zu entformenden Formbackenpaares synchron zusammenwirkt. Es kann hierfür vorgesehen sein, daß die Drehscheibe auf der Scheibenfläche vier Mitnehmer aufweist nämlich auf der einen ersten Hälfte der Scheibenfläche den ersten und den zweiten Mitnehmer und auf der zweiten Hälfte derScheibenfläche symmetrisch hierzu angeordnet einen weiteren ersten und einen weiteren zweiten Mitnehmer aufweist.

Eine vorteilhafte Arbeitsweise wird erhalten, wenn die Drehscheibe alternierend im Uhrzeigersinn und gegen den Uhrzeigersinn angetrieben ist, vorzugsweise jeweils mit einem Drehwinkel von 90°.

Über die Drehscheibeneinrichtung werden die Formbacken auseinandergefahren und in eine Bereitschaftsstellung verbracht, von der sie von dem zugeordneten Greifer abgeholt werden, um sie zum Anfang der Formstrecke zurückzuführen. Um eine sichere Übergabe der Formbacken durch den Greifer zu gewährleisten, kann in dem Maschinentisch eine versenkbare Leiste vorgesehen sein, die den Formbacken in der Bereitschaftsposition hält, wenn die Ineingriffnahme des Greifers erfolgt.

Weitere konstruktive Merkmale und Vorteile ergeben sich aus dem Ausführungsbeispiel, das nachfolgend anhand der Figuren näher beschrieben ist.

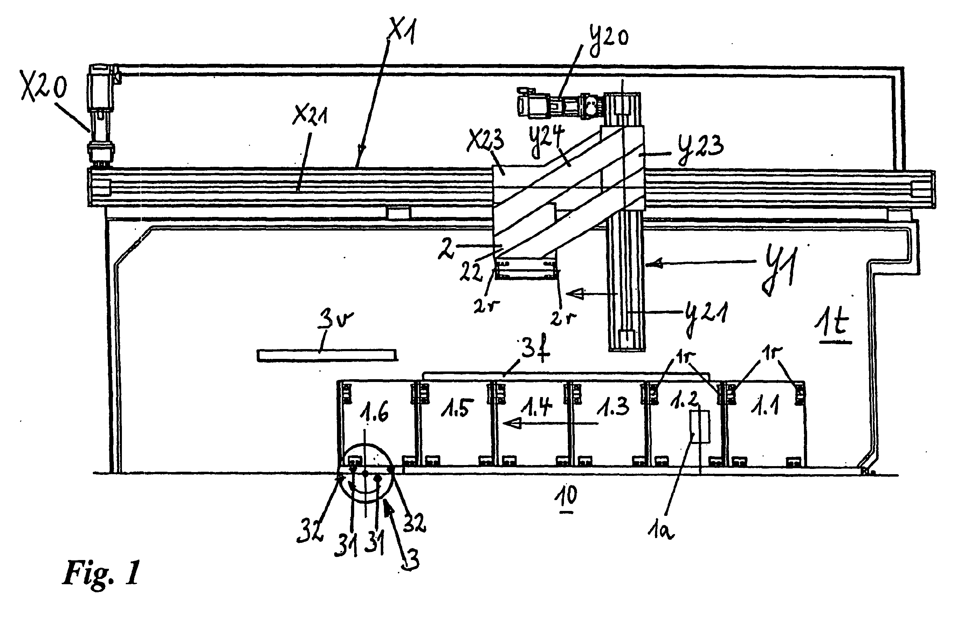

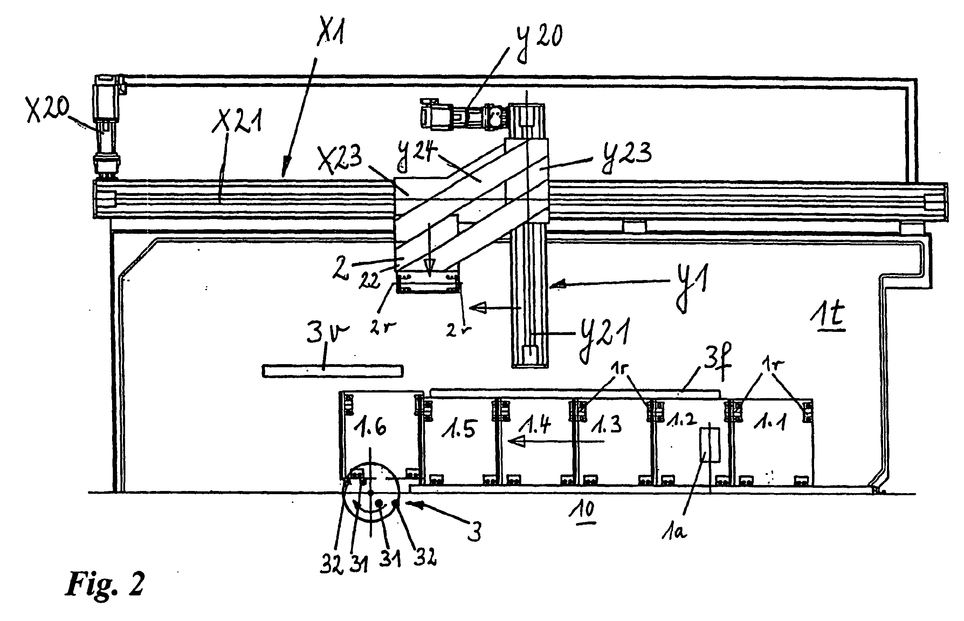

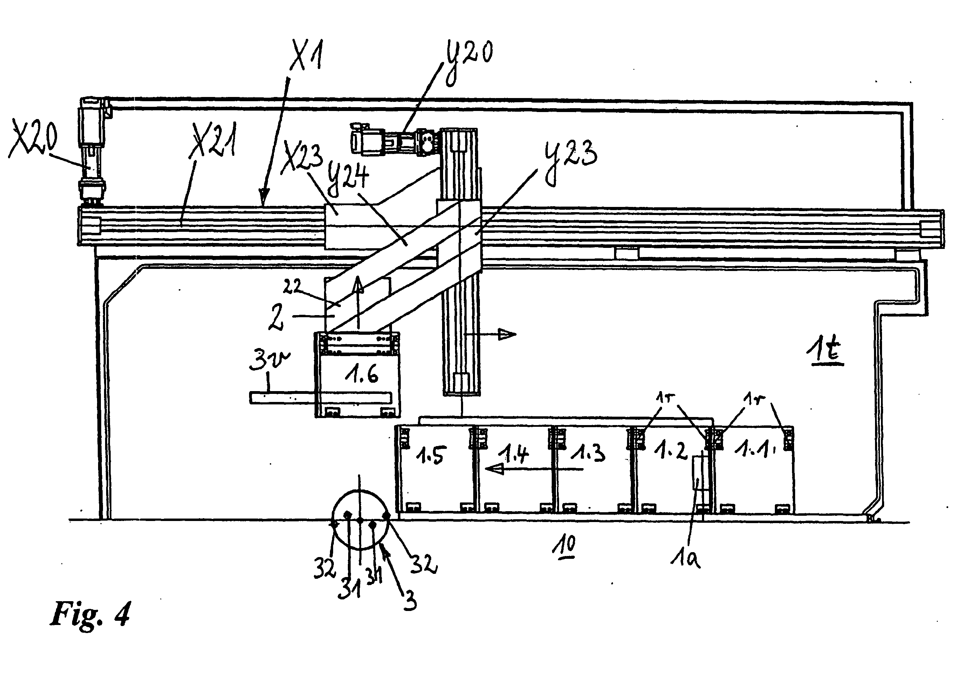

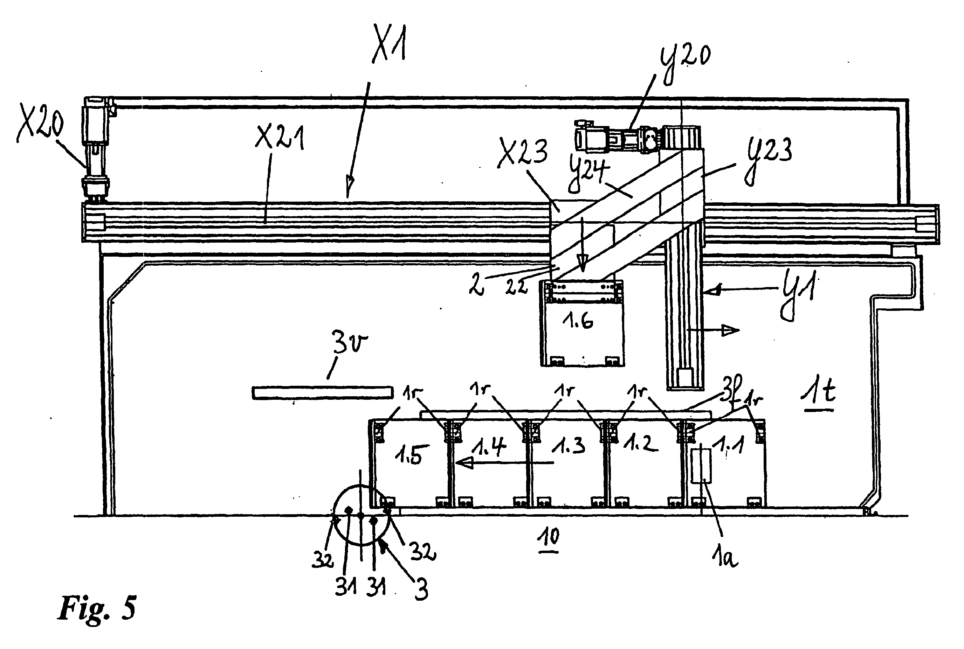

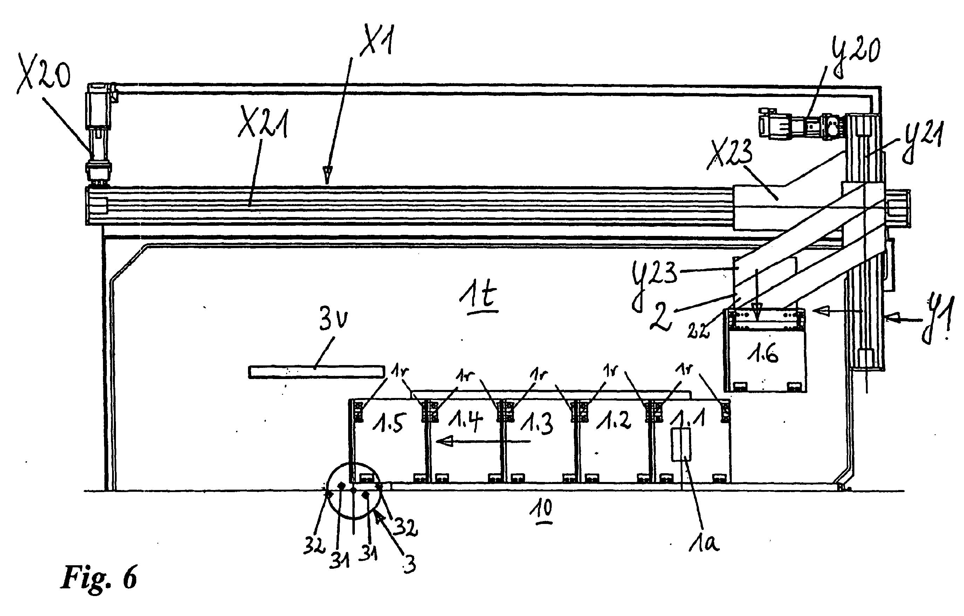

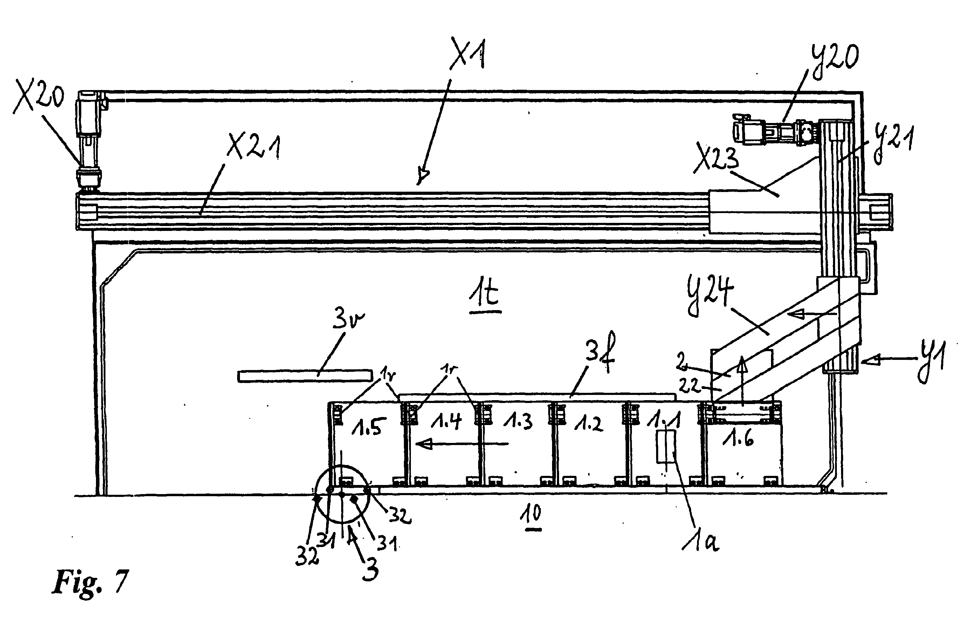

Dabei zeigt
- Figur 1 bis 7: eine Draufsicht einer rechten Hälfte des Maschinentischs einer Korrugatoreinrichtung mit auf dem Maschinentisch geführten rechten Formbacken mit in einer linearen Formstrecke angeordneten sechs Formbacken mit einem Greifer mit zugehöriger Führungs- und Antriebseinrichtung zur Rückführung der Formbacken und mit einer Entformungseinrichtung mit Drehscheibeneinrichtung in sieben aufeinanderfolgenden Verfahrensstadien beim Entformen und Rückführen der Formbacken.

Die Figuren 1 bis 7 zeigen lediglich die rechte Hälfte des Maschinentischs des Korrugators. In dieser rechten Hälfte sind lediglich die rechten Formbacken 1.1 bis 1.6 gezeigt. Sie sind in der linearen Formstrecke 10 hintereinander angeordnet. Sie bilden zusammen mit den nicht dargestellten linken Formbacken in der Formstrecke 10 einen linearen Formkanal. Die in den Figuren nicht dargestellte linke Hälfte des Maschinentischs weist also eine entsprechende Anordnung der linken Formbacken auf, wie die in den Figuren gezeigte rechte Anordnung. Ferner weist die linke Hälfte des Maschinentischs auch eine Greifereinrichtung zur Rückführung der linken Formbacken auf, die entsprechend wie die in den Figuren dargestellten Greifereinrichtung der rechten Formbacken ausgebildet ist.

Das in den Figuren dargestellte Ausführungsbeispiel des Korrugators weist einen horizontalen Maschinentisch 1t auf, auf dem in dem dargestellten Fall sechs Formbackenpaare in einer linearen Formstrecke 10 hintereinander in einer Reihe fortschreitend entlang einer festen Führungsleiste 1f geführt sind. Jedes Formbackenpaar ist jeweils aus einem linken und einem rechten Formbacken 1.1 bis 1.6 gebildet. Sie umschließen jeweils einen zylindrischen Formhohlraum. Die in der linearen Formstrecke 10 in einer Reihe geführten sechs Formbackenpaare bilden in der Formstrecke einen durchgehenden Formkanal. Er setzt sich aus den axial einander anschließenden zylindrischen Formhohlräumen der Formbackenpaare zusammen.

Die Formbackenpaare in der linearen Formstrecke 10 sind über eine in dem Maschinentisch 1t angeordneten Antriebseinrichtung zur linearen Bewegung entlang der Formstrecke 10 angetrieben. Hierfür weisen die Formbacken 1 bodenseitig jeweils eine Zahnstange auf, mit der das durch den Maschinentisch greifende Abtriebsritzel 1 a des Antriebsmotors kämmt. Die Rückführung der Formbacken 1.1 bis 1.6 vom Ende zum Anfang der Formstrecke 10 erfolgt über motorisch angetriebene Greifer 2. Die Formstrecke 10 mit dem Formkanal ist in der Mittellängsachse des Maschinentischs 1t angeordnet. Rechts von der Formstrecke 10 auf der rechten Hälfte des Maschinentischs 1t erfolgt die Rückführung der rechten Formbacken und in entsprechender Weise links von der Formstrecke auf der linken Hälfte des Maschinentischs erfolgt die Rückführung der linken Formbacken. Es ist eine separate Greifereinrichtung mit einem Greifer 2 für die rechten Formbacken 1 und eine separate Greifereinrichtung mit einem Greifer 2 für die linken Formbacken 1 vorgesehen.

Diese beiden Greifereinrichtungen weisen jeweils eine separate Führungs- und Antriebseinrichtung für den zugeordneten separaten Greifer 2 auf. Die rechte Greifereinrichtung mit dem zugeordneten Greifer 2 ist über der rechten Tischhälfte des Maschinentischs 1t und die linke Greifereinrichtung mit dem zugeordneten Greifer 2 ist über der linken Tischhälfte des Maschinentischs 1 t angeordnet.

Am Ende der Formstrecke 10 ist noch eine Entformungseinrichtung mit einer motorisch angetriebenen Drehscheibe 3 angeordnet, um am Ende der Formstrecke die endständigen Formbackenpaare zu entformen, d. h. die rechten und die linken endständigen Formbacken 1 auseinanderzufahren.

In dem dargestellten Fall ist eine solche Entformungseinrichtung auf dem Maschinentisch 1t unterseitig auf die endständigen Formbacken einwirkend angeordnet und eine entsprechende (in den Figuren nicht gezeigte) Entformungseinrichtung im Oberbau des Maschinentischs 1 t an der Oberseite der endständigen Formbacken einwirkend angeordnet. Diese beiden unteren und oberen Entformungseinrichtungen arbeiten synchron von unten und oben einwirkend.

Die motorisch angetriebene Drehscheibe 3 der Entformungseinrichtung ist als kreisrunde Scheibe ausgebildet. Sie ist so angeordnet, daß die Scheibenfläche parallel zur Tischfläche angeordnet ist. Die Scheibenfläche rotiert um die senkrecht auf die Scheibenfläche gerichtete zentrale Drehachse. Der Antrieb der Drehscheibe erfolgt über einen elektrischen Antriebsmotor 1a alternierend im Uhrzeigersinn und gegen den Uhrzeigersinn mit Drehwinkel bis 90°. Auf der den Formbacken zugewandten Scheibenfläche sind vier Mitnehmerrollen 31, 31, 32, 32 von der Scheibenfläche senkrecht abstehend angeordnet. Diese vier Mitnehmerrollen sind symmetrisch wie folgt angeordnet:
Die Scheibenfläche ist in eine linke und eine rechte Scheibenhälfte unterteilt. Die Unterteilungslinie wird von einer Durchmesserlinie gebildet, die von der zentralen Drehachse in ihrer Mitte gekreuzt wird.

In jeder Hälfte ist jeweils eine erste Mitnehmerrolle 31 und eine zweite Mitnehmerrolle 32 angeordnet, wobei die erste Mitnehmerrolle 31 radial weiter innen als die zweite Mitnehmerrolle 32 angeordnet ist, d. h. der Abstand der ersten Mitnehmerrolle 31 zur zentralen Drehachse ist geringer als der Abstand der zweiten Mitnehmerrolle 32 zur zentralen Drehachse. Die Anordnung der ersten und der zweiten Mitnehmerrolle 31, 32 in jeder Scheibenhälfte ist so, daß jeweils die Verbindungslinie der in einer Scheibenhälfte angeordneten ersten und zweiten Mitnehmerrollen 31, 32 parallel zur Durchmesserlinie verläuft. Die Verbindungslinien verlaufen zueinander parallel und der Abstand der Verbindungslinien zur Durchmesserlinie ist jeweils gleich.

Die Anordnung der ersten und zweiten Mitnehmerrollen 31, 32 in den beiden Scheibenhälften ist symmetrisch zueinander und zwar derart, daß die erste Mitnehmerrolle 31 der ersten Scheibenhälfte und die erste Mitnehmerrolle 31 der zweiten Scheibenhälfte spiegelsymmetrisch zur zentralen Drehachse angeordnet sind und in entsprechender Weise sind auch die zweite Mitnehmerrolle 32 der ersten Scheibenhälfte und die zweite Mitnehmerrolle 32 der zweiten Scheibenhälfte zur zentralen Drehachse spiegelsymmetrisch.

Beim Entformen wirken die Mitnehmerrollen, 31, 32 mit dem Formbacken zusammen. Wesentlich ist, daß bei dem Entformvorgang in einem ersten Schritt zunächst die erste Mitnehmerrolle 31 mit ihrem kleineren wirksamen Hebelarm auf den Formbacken einwirkt und sodann in einem zweiten Schritt die zweite Mitnehmerrolle 32 mit ihrem größeren wirksamen Hebelarm auf den Formbacken einwirkt. Bei gleichem Drehmoment der motorisch angetriebenen Drehscheibe 3 wirkt somit zum Anfang des Enformens eine relativ große Kraft auf die Formbacken über die ersten Mitnehmer 31 ein. Im weiteren Verlauf der Entformung wirken dann die zweiten Mitnehmer 32 über ihren längeren Hebelarm mit kleinerer Kraft auf die Formbacken ein.

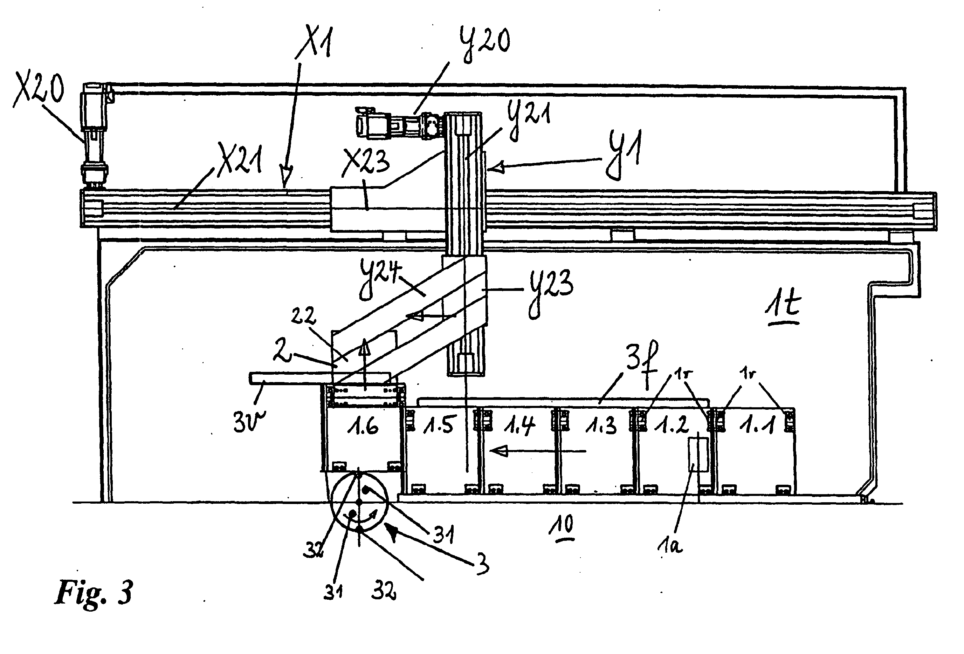

Die verschiedenen Stadien des Entformungsvorgangs sind am Beispiel der rechten Formbacken 1.1 bis 1.6 in den sieben Figuren 1 bis 7 dargestellt. Sie zeigen im Einzelnen:
Figur 1:
   Die Drehscheibe 3 wird im Uhrzeigersinn angetrieben. Die Mitnehmerrolle 31 liegt an der Längsinnenkante des Formbackens 1.6 an. Die Mitnehmerrolle 31 drückt den Formbacken 1.6 aus dem Mittelkanal heraus. Der kurze Hebelarm ist über Mitnehmerrolle 31 wirksam und überträgt eine relativ große Kraft auf den Formbacken.
Figur 2:
   Die Drehscheibe 3 wird weiterhin im Uhrzeigersinn angetrieben. Die Mitnehmerrolle 31 und die Mitnehmerrolle 32 liegen an der Längsinnenkante des Formbackens 1.6 an. Die Mitnehmerrolle 31 und die Mitnehmerrolle 32 drücken den bereits ein erstes Stück ausgerückten Formbacken 1.6 weiter aus dem Mittelkanal heraus. Der längere Hebelarm der Mitnehmerrolle 32 ist wirksam und überträgt eine geringere Kraft als im vorangehend gezeigten Stadium auf den Formbacken 1.6.
Figur 3:
   Die Drehscheibe hat ihre 90° Drehstellung erreicht. Die Mitnehmerrolle 32 liegt alleine an der Längsinnenkante des Formbackens 1.6 an. Der Formbacken hat nun seine ausgerückte Position erreicht und liegt mit der Längsaußenkante an der herausgefahrenen Führungsleiste 3v an. Die Führungsleiste 3v sorgt für eine stabile Ausrichtung des Formbackens parallel zum Formkanal 10 in der dargestellten Bereitschaftsstellung und während des Ankoppelvorgangs des Greifers 2. Der Greifer 2 ist in Figur 3 inzwischen an den in der Bereitschaftsposition stehenden Formbacken 1.6 herangefahren worden und steht bereits in Eingriff mit dem Formbacken. Die Drehscheibe 3 wird nun im Gegenuhrzeigersinn angetrieben, um in ihre Ausgangsposition um 90 ° Drehwinkel wieder zurückzudrehen.
Figur 4:
   Die versenkbare Führungsleiste 3v ist nun in den Maschinentisch 1t versenkt. Der Greifer 2 führt den in Eingriff gehaltenen Formbacken 1.6 über die versenkte Führungsleiste 3v in Y-Richtung nach außen und gleichzeitig in X-Richtung zurück in Richtung zum Anfang der Formstrecke 10 hin. Die Drehscheibe 3 ist inzwischen in Ihrer Ausgangsposition zurückgedreht und steht nun still. Der Formbacken 1.5 ist in Richtung zum Ende der Formstrecke weitergerückt, steht jedoch noch nicht in Wirkverbindung mit den Mitnehmern der Drehscheibe 3.
Figur 5:
   Die Führungsleiste 3v ist inzwischen wieder aus dem Maschinentisch 1t hochgefahren. Die Drehscheibe 3 steht weiterhin still in ihrer Ausgangsposition. Der Formbacken 1.5 wird nun in den Bereich der Drehscheibe 3 weitergerückt und ist bereits in Anlage der Mitnehmerrolle 32 gekommen. Die Mitnehmerrolle 31 ist jedoch noch nicht in Anlage. Der Greifer 2 hält den Formbacken 1.6 weiterhin in Eingriff. Er hat den Formbacken 1.6 noch nicht vollständig in die Anfangsposition am Anfang der Formstrecke eingerückt.
Figur 6:
   Der Formbacken 1.5 ist nun weiter bis zum Ende der Formstrecke 10 vorangerückt. Er liegt auf der Mitnehmerrolle 32 auf. Es besteht jedoch noch keine Auflage auf der Mitnehmerrolle 31. Die Drehscheibe 3 steht noch still. Der Formbacken 1.6 ist weiterhin im Eingriff mit dem Greifer 2 und hat nun aber die Position unmittelbar vor dem Einrücken am Anfang der Formstrecke 10 erreicht. Er wird gerade von dem Greifer 2 in Y-Richtung in seine Anfangsposition eingerückt.
Figur 7:
   Der Formbacken 1.6 ist nun in seiner Anfangsposition am Anfang der Formstrecke 10 eingerückt. Der Eingriff mit dem Greifer 2 wird gerade gelöst und sodann der Greifer 2 in Y-Richtung nach außen weggefahren. Der Formbacken 1.5 steht nun in Anlage mit der Mitnehmerrolle 31 sowie mit der Mitnehmerrolle 32. Die Drehscheibe 3 steht noch still. Es folgt nun unmittelbar das Stadium, wie es in Figur 1. dargestellt ist, jedoch vorgerückt um einen Formbacken, d. h. es erfolgt der Entformungsvorgang des Formbackens 1.5.

Die Entformung der linken Formbacken 1 erfolgt in entsprechender Weise über dieselbe Drehscheibe 3 und zwar unter Einwirkung der beiden weiteren Mitnehmer 31, 32 auf die in den Figuren 1 bis 7 nicht dargestellten linken Formbacken.

Die Rückführung der Formbacken erfolgt wie bereits erwähnt über Greifer 2, wobei für die rechten Formbacken ein Greifer 2 mit separater Führungs- und Antriebseinrichtung und für die linken Formbacken ein Greifer 2 mit separater Führungs- und Antriebseinrichtung vorgesehen ist.

Der Aufbau und die Funktion der Greifereinrichtung wird nun anhand der rechten Greifereinrichtung, wie sie in den Figuren 1 bis 7 dargestellt ist, beschrieben. Die Greifereinrichtung weist eine lineare X-Führungsschiene X1 auf, die auf dem Maschinentisch 1t installiert ist. Diese X-Führungsschiene X1 erstreckt sich in X-Richtung in die Nähe und entlang des rechten Außenrands des Maschinentischs, wie am besten in Figur 1 erkennbar ist. Sie weist ein Führungsgehäuse mit nach oben offenem Führungsschlitz auf, der sich in X-Richtung längs des Gehäuses erstreckt. In dem Führungsgehäuse ist ein über einen Servomotor X20 umlaufend angetriebenes Band X21 in X-Richtung geführt. Der Servomotor X20 ist endständig an dem Gehäuse der Führungsschiene X1 montiert. In dem Führungsschlitz ist ein mit dem umlaufenden Band verbundener X-Mitnehmer X22 geführt, der mit einem auf dem Gehäuse der Führungsschiene aufliegend geführten Schlitten X23 verbunden ist. Der X-Mitnehmer X22 ist in der Draufsichtdarstellung der Figuren durch den Schlitten X23 verdeckt.

Auf dem Schlitten X23 ist eine Y-Schieneneinrichtung Y1 fest montiert. Die Y-Schiene Y1 erstreckt sich in Y-Richtung, d. h. quer zur X-Richtung und zwar von der X-Führungsschiene X1 zur Mittelachse, d. h. quer zur Achse der Formstrecke 10 hin. Die Y-Führungsschiene Y1 ist analog aufgebaut wie die X-Führungsschiene X1. Sie ist lediglich axial kürzer ausgebildet. Sie weist ein Y-Führungsgehäuse ebenfalls mit nach oben offenem Führungsschlitz auf, der sich in Y-Richtung erstreckt. In dem Y-Führungssgehäuse ist ein in Y-Richtung umlaufend motorisch angetriebenes Band geführt. Als Antriebsmotor dient ebenfalls ein Servomotor Y20, der auf dem Y-Führungsgehäuse montiert ist. Der mit dem umlaufenden Band Y21 verbundene Y-Mitnehmer Y22 durchgreift in entsprechender Weise den Führungsschlitz im Y-Gehäuse und ist mit einem auf dem Y-Gehäuse aufliegend geführten Schlitten Y23 verbunden. Der Y-Mitnehmer Y22 ist in der Draufsichtdarstellung der Figuren durch den Schlitten Y23 verdeckt. Auf dem Schlitten Y23 ist der Greifer 2 über eine Winkelstütze Y24 starr montiert. Die Winkelstütze Y24 erstreckt sich in einem Winkel von ca. 45 ° zur Y-Richtung, so daß der Greifer 2 mit seiner Eingriffseite senkrecht zur Längsachse der Formstrecke 10 gewandt ist.

Der Greifer 2 weist an seiner Eingriffseite eine Rastbolzeneinrichtung 2r auf, die mit einem auf dem Greiferkopf angeordneten Betätigungsmotor 22 über einen Kniehebelmechanismus verbunden ist. Über den Betätigungsmotor 22 wird der Kniehebelmechanismus zur Betätigung der Rastbolzen 2r angetrieben, Zum Eingreifen werden die Rastbolzen 2r über den angetriebenen Kniehebel-mechanismus auseinander gefahren. Zum Lösen werden die Rastbolzen 2r in Gegenrichtung über den angetriebenen Kniehebelmechanismus zusammen gefahren. Die Bewegungslinie der Rastbolzen 2r ist eine gerade Achse, in der die Achsen der Rastbolzen 2r fluchten. Die Formbacken weisen an der von der Formstrecke 10 abgewandten Außenseite jeweils eine Rastlocheinrichtung 1r auf. Sie umfaßt zwei axial miteinander fluchtende Rastlöcher 1r in die die Rastbolzen 2r des Greifers 2 in der Ankupplungsstellung ein- und ausrastbar sind.

Der dargestellte Korrugator arbeitet wie folgt:
Der aus einer nicht dargestellten Düseneinrichtung eines Extruders austretende Kunststoffschmelzeschlauch durchläuft den Formkanal, der in der Formstrecke 10 von den hintereinander angeordneten wandernden Formbackenpaaren gebildet wird. Die Formbacken 1.1 bis 1.6 werden bodenseitig über das Abtriebsritzel 1 a des Antriebsmotors in X-Richtung angetrieben. Über die Greifer 2 werden die Formbacken 1.1 bis 1.6 jeweils vom Ende der Formstrecke 10 zum Anfang rückgeführt. Zum Entformen der Formbackenpaare am Ende der Formstrecke 10 ist die Entformungseinrichtung mit der motorisch angetriebenen Drehscheibe 3 am Ende der Formstrecke 10 angeordnet.

Der Kunststoffschmelzeschlauch wird in dem Formkanal des Korrugators gekühlt und geformt unter Ausbildung eines Wellrohres. Am Ende des Formkanals tritt das fertig geformte Wellrohr als Endlosrohr aus.

Zur Formung und Kühlung im Formkanal weist der Korrugator ansich bekannte Vakuum- und Kühleinrichtungen auf, die in der vorliegenden Anmeldung nicht näher beschrieben sind.

### Bezugszeichenliste

- 1.1 bis 1.6: Formbacken
- 1t: Maschinentisch
- 1a: Abtriebsritzel
- 1f: Feste Führungsleiste
- 1r: Rastlöcher pro Greifer
- 2r: Rastbolzeneinrichtung
- 22: Rastbolzenbetätigungsmotor
- 3: Drehscheibe
- 31, 32: Mitnehmerrollen
- 3v: Versenkbare Führungsleiste
- 10: Formstrecke
- X1: Führungseinrichtung in X-Richtung
- X20: Servomotor
- X21: Angetriebenes Band
- X22: Mitnehmer
- X23: Schlitten
- Y1: Schieneneinrichtung in Y-Richtung
- Y20: Servomotor
- Y21: Angetriebenes Band
- Y22: Mitnehmer
- Y23: Schlitten
- Y24: Winkelstütze

## Patentansprüche

1. Korrugatoreinrichtung zum Ausformen von thermoplastischen Wellrohren aus einem aus einer Extrusionseinrichtung austretenden Kunststoffschmelzeschlauch,
mit in einer linearen Formstrecke (10) umlaufend geführten Formbacken (1.1 bis 1.6), die paarweise hintereinander angeordnet in der Formstrecke (10) einen Formkanal bilden, wobei die Formbackenpaare aus linken und rechten Formbacken (1.1 bis 1.6) gebildet sind und zwischen sich zur Bildung des Formkanals einen zylindrischen Formhohlraum umschließen;
mit Greifern (2), um die Formbacken (1.1 bis 1.6.) vom Ende der Formstrecke (10) zum Anfang der Formstrecke (10) zurückzuführen;
mit einer am Ende der Formstrecke (10) angeordneten Entformungseinrichtung, die mindestens eine motorisch angetriebene Drehscheibe (3) aufweist und mit dem am Ende der Formstrecke (10) angelangten Formbackenpaar zusammenwirkt, indem sie die Formbacken (1.1 bis 1.6.) des Formbackenpaars auseinander bewegt;
**dadurch gekennzeichnet,**
**daß** die motorisch angetriebene Drehscheibe mit senkrecht auf ihrer Scheibenfläche stehender zentraler Drehachse und mindestens zwei auf der Scheibenfläche angeordneten Mitnehmern (31, 32) ausgebildet ist, wobei der Abstand des ersten Mitnehmers (31) zur zentralen Drehachse kleiner ist als der Abstand des zweiten Mitnehmers (32) zur zentralen Achse;
**daß** die Formbacken (1.1 bis 1.6) so geführt sind, daß im Bereich des Endes der Formstrecke (10) zunächst der erste Mitnehmer (31) der Drehscheibe mit dem zu entformenden Formbacken (1.1 bis 1.6) zusammenwirkt und mit weiterer Drehung der Drehscheibe (3) der zweite Mitnehmer (32) mit diesem Formbacken (1.1 bis 1.6) in Eingriff kommt.

2. Korrugatoreinrichtung zum Ausformen von thermoplastischen Wellrohren aus einem aus einer Extrusionseinrichtung austretenden Kunststoffschmelzeschlauch,
mit in einer linearen Formstrecke (10) umlaufend geführten Formbacken (1.1 bis 1.6), die paarweise hintereinander angeordnet in der Formstrecke (10) einen Formkanal bilden, wobei die Formbackenpaare aus linken und rechten Formbacken (1.1 bis 1.6) gebildet sind und zwischen sich zur Bildung des Formkanals einen zylindrischen Formhohlraum umschließen;
mit Greifern (2) um die Formbacken (1.1 bis 1.6.) vom Ende der Formstrecke (10) zum Anfang der Formstrecke (10) zurückzuführen;
mit einer am Ende der Formstrecke (10) angeordneten Entformungseinrichtung (3), die mindestens eine motorisch angetriebene Drehscheibe (3) aufweist und mit den am Ende der Formstrecke (10) angelangten Formbackenpaar zusammenwirkt, indem sie die Formbacken (1.1 bis 1.6) des Formbackenpaars auseinander bewegt;
**dadurch gekennzeichnet,**
**daß** die motorisch angetriebene Drehscheibe (3) mit senkrecht auf ihrer Scheibenfläche stehender zentraler Drehachse und mindestens einem Mitnehmer (31, 32) ausgebildet ist, und
**daß** am Ende der Formstrecke (10) eine erste solche motorisch angetriebene Drehscheibe (3) mit ihrer Scheibenfläche der Unterseite des dort angelegten Formbackenpaares zugewandt und eine zweite solche motorisch angetriebene Drehscheibe (3) mit ihrer Scheibenfläche der Oberseite desselben Formbackenpaares zugewandt derart angeordnet sind, daß die erste und die zweite Drehscheibe (3) über ihre Mitnehmer (31), (32) an den Formbacken (1.1 bis 1.6) des endständigen Formbackenpaares von unten her und von oben her eingreifend einwirken, um die Formbacken nach außen zu bewegen.

3. Korrugatoreinrichtung nach einem der vorangehenden Ansprüche,
**dadurch gekennzeichnet,**
**daß** auf einer ersten Hälfte der Scheibenfläche ein erster Mitnehmer (31) und ein zweiter Mitnehmer (32) und auf einer zweiten Hälfte der Scheibenfläche symmetrisch angeordnet ein weiterer erster Mitnehmer (31) und ein weiterer zweiter Mitnehmer (32) angeordnet sind und zwar derart, daß der erste Mitnehmer (31) und der zweite Mitnehmer (32) mit den beiden Formbacken (1.1 bis 1.6) des am Ende der kurzen Formstrecke (10) geführten Formbackenpaares synchron zusammenwirkt.

4. Korrugatoreinrichtung nach Anspruch 3,
**dadurch gekennzeichnet,**
**daß** der erste Mitnehmer (31) und der zweite Mitnehmer (32) auf einer Verbindungslinie angeordnet sind, die parallel zu einer Durchmesserlinie auf der Scheibenfläche verläuft und ebenfalls parallel zu einer zweiten Verbindungslinie des weiteren ersten Mitnehmers (31) und des weiteren zweiten Mitnehmers (32) auf der Scheibenfläche verläuft, wobei der Abstand der ersten Verbindungslinie zur Durchmesserlinie gleich ist wie der Abstand der zweiten Verbindungslinie zur Durchmesserlinie.

5. Korrugatoreinrichtung nach einem der vorangehenden Ansprüche,
**dadurch gekennzeichnet,**
**daß** die beiden ersten Mitnehmer (31) zu einander spiegelbildlich um die zentrale Drehachse angeordnet sind und daß die beiden zweiten Mitnehmer (32) zu einander spiegelbildlich um die zentrale Drehachse angeordnet sind.

6. Korrugatoreinrichtung nach einem der vorangehenden Ansprüche,
**dadurch gekennzeichnet,**
**daß** die Drehscheibe (3) alternierend im Uhrzeigersinn und gegen Uhrzeigersinn angetrieben ist.

7. Korrugatoreinrichtung nach Anspruch 6,
**dadurch gekennzeichnet,**
**daß** die Drehscheibe (3) alternierend im Uhrzeigersinn und gegen Uhrzeigersinn jeweils mit 90 ° Drehwinkel angetrieben ist.

8. Korrugatoreinrichtung nach einem der vorangehenden Ansprüche,
**dadurch gekennzeichnet,**
**daß** im Bereich des Endes der linearen Formstrecke (10) parallel versetzt zur Längsachse der linearen Formstrecke (10) eine versenkbare lineare Führungsleiste (3v) angeordnet ist.

9. Korrugatoreinrichtung nach einem der vorangehenden Ansprüche,
**dadurch gekennzeichnet,**
**daß** der Drehscheibe (3) eine Keileinrichtung mit Keilfläche nachgeschaltet ist, die so angeordnet ist, daß die Keilfläche mit dem mit der Drehscheibe (3) in Eingriff stehenden Formbacken (1.1 bis 1.6) zusammenwirkt, indem der Formbacken an der Keilfläche abgleitet.

10. Korrugatoreinrichtung nach Anspruch 9,
**dadurch gekennzeichnet,**
**daß** die Keileinrichtung zwei symmetrisch zur Längsachse der Formstrecke (10) winkelig angeordnete Keilflächen aufweist, wobei die eine Keilfläche so angeordnet ist, daß sie mit dem einen mit der Drehscheibe (3) in Eingriff stehenden Formbacken (1.1 bis 1.6) zusammenwirkt und die andere Keilfläche so angeordnet ist, daß sie mit dem anderen mit der Drehscheibe (3) in Eingriff stehenden Formbacken (1.1 bis 1.6.) zusammenwirkt.

## Claims

1. Corrugator device for shaping thermoplastic corrugated pipes from a molten plastic tube emerging from an extrusion device,
having moulding jaws (1.1 to 1.6) guided for circulation in a linear moulding section (10), which are arranged in pairs behind one another to form a moulding channel in the moulding section (10), wherein the pairs of moulding jaws are formed from left-hand and right-hand moulding jaws (1.1 to 1.6) and, between them, surround a cylindrical mould cavity for the formation of the moulding channel;
having grippers (2) to guide the moulding jaws (1.1 to 1.6) back from the end of the moulding section (10) to the start of the moulding section (10);
having a mould release device, which has at least one motor-driven rotary disc (3), arranged at the end of the moulding section (10), and which interacts with the pair of moulding jaws that have arrived at the end of the moulding section (10), while it moves the moulding jaws (1.1 to 1.6) of the pair of moulding jaws out of oneanother.;
**characterised in that**,
the motor-driven rotary discis designed with a central axis of rotation located perpendicular to its disc face and at least two drivers (31, 32) arranged on the disc face, wherein the distance between the first driver (31) and the central axis of rotation is smaller than the distance between the second driver (32) and the central axis;
the moulding jaws (1.1 to 1.6) are guided in such a way that, firstly, in the region of the end of the moulding section (10), the first driver (31) of the rotary disc interacts with the moulding jaw (1.1 to 1.6) that is to be released and comes into engagement with this moulding jaw (1.1 to 1.6) when the rotary disc (3) of the second driver (32) is rotated further.

2. Corrugator device for shaping thermoplastic corrugated pipes from a molten plastic tube emerging from an extrusion device,
having moulding jaws (1.1 to 1.6) guided for circulation in a linear moulding section (10), which are arranged in pairs behind one another to form a moulding channel in the moulding section (10), wherein the pairs of moulding jaws are formed from left-hand and right-hand moulding jaws (1.1 to 1.6) and, between them, surround a cylindrical mould cavity for the formation of the moulding channel;
having grippers (2) to guide the moulding jaws (1.1 to 1.6) back from the end of the moulding section (10) to the start of the moulding section (10);
having a mould release device (3), which has at least one motor-driven rotary disc (3), arranged at the end of the moulding section (10), and which interacts with the pair of moulding jaws that have arrived at the end of the moulding section (10), while it moves the moulding jaws (1.1 to 1.6) of the pair of moulding jaws out of one another;
**characterised in that**,
the motor-driven rotary disc (3) is designed with a central axis of rotation located perpendicular to its disc face and at least one driver (31, 32), and
at the end of the moulding section (10), a first such motor-driven rotary disc (3), with its disc face, points towards the underside of the pair of moulding jaws installed there, and a second such motor-driven rotary disc (3), with its disc face, points towards the upper side of the same pair of moulding jaws in such a way that the first and the second rotary disc (3) act invasively on the moulding jaws (1.1 to 1.6) of the terminal pair of moulding jaws from below and from above via its drivers (31, 32), so as to move the moulding jaws outwards.

3. Corrugator device according to one of the preceding claims, **characterised in that**,
a first driver (31) and a second driver (32) are arranged on a first half of the disc face and a further first driver (31) and a further second driver (32) are symmetrically arranged on a second half of the disc face, and indeed in such a way that the first driver (31) and the second driver (32) interact synchronously with both moulding jaws (1.1 to 1.6) of the pair of moulding jaws guided at the end of the short moulding section (10).

4. Corrugator device according to claim 3,
**characterised in that**,
the first driver (31) and the second driver (32) are arranged on a connecting line, which runs parallel to a diameter line on the disc face and also runs parallel to a second connecting line of the further first driver (31) and the further second driver (32) on the disc face, wherein the distance between the first connecting line and the diameter line is the same as the distance between the second connecting line and the diameter line.

5. Corrugator device according to one of the preceding claims,
**characterised in that**,
both first drivers (31) are arranged around the central axis of rotation as a mirror image to each other and both second drivers (32) are arranged around the central axis of rotation as a mirror image to each other.

6. Corrugator device according to one of the preceding claims,
**characterised in that**,
therotary disc (3) is driven, alternatingly, clockwise and anti-clockwise.

7. Corrugator device according to claim 6,
**characterised in that**,
the rotary disc (3) is driven, alternatingly, clockwise and anti-clockwise at a respective 90° angle of rotation.

8. Corrugator device according to one of the preceding claims,
**characterised in that**,
an immersible linear guide rail (3v) is arranged in the region of the end of the linear moulding section (10) with parallel displacement to the longitudinal axis of the linear moulding section (10).

9. Corrugator device according to one of the preceding claims,
**characterised in that**,
the a wedge device with a wedge face is located downstream of the rotary disc (3), which is arranged in such a way that the wedge face interacts with the moulding jaw (1.1 to 1.6) that is in engagement with the rotary disc (3), while the moulding jaw deviates at the wedge face.

10. Corrugator device according to claim 9,
**characterised in that**,
the wedge device has two wedge faces arranged symmetrically at an angle to the longitudinal axis of the moulding section (10), wherein the first wedge face is arranged in such a way that it interacts with the first moulding jaw (1.1 to 1.6) engaging with the rotary disc (3) and the other wedge face is arranged in such a way that it interacts with the other moulding jaw (1.1 to 1.6) engaging with the rotary disc (3).

## Revendications

1. Dispositif de machine à onduler destiné à former des tubes ondulés thermoplastiques à partir d'un tuyau de fusion de matière plastique sortant d'un dispositif d'extrusion,
comprenant des mâchoires de moulage (1.1 à 1.6) guidées en carrousel dans un tronçon de moulage linéaire (10), qui agencées l'une derrière l'autre par paires dans le tronçon de moulage (10), forment une conduite de moulage, étant entendu que les paires de mâchoires de moulage sont constituées de mâchoires de moulage (1.1 à 1.6) gauches et droites et enferment entre elles un espace creux de moulage cylindrique de façon à former la conduite de moulage,
comprenant des pinces (2) afin de ramener les mâchoires de moulage (1.1 à 1.6) de la fin du tronçon de moulage (10) au début du tronçon de moulage (10),
comprenant un dispositif de démoulage agencé à la fin du tronçon de moulage (10), qui présente au moins un plateau rotatif (3) entraîné par un moteur et coopère avec la paire de mâchoires de moulage arrivée à la fin du tronçon de moulage (10) en ce qu'il écarte les mâchoires de moulage (1.1 à 1.6) de la paire de mâchoires de moulage l'une de l'autre,
**caractérisé**
**en ce que** le plateau rotatif entraîné par un moteur est réalisé avec un axe de rotation central installé verticalement sur la surface du plateau et au moins deux tenons d'entraînement (31, 32) agencés sur la surface du plateau, étant entendu que la distance entre le premier tenon d'entraînement (31) et l'axe de rotation central est inférieure à la distance entre le deuxième tenon d'entraînement (32) et l'axe central, et
**en ce que** les mâchoires de moulage (1.1 à 1.6) sont guidées de telle sorte que dans la zone de la fin du tronçon de moulage (10), le premier tenon d'entraînement (31) du plateau rotatif coopère en premier lieu avec la mâchoire de moulage (1.1 à 1.6) à démouler, et après une rotation supplémentaire du plateau rotatif (3), le deuxième tenon d'entraînement (32) vient en prise avec cette mâchoire de moulage (1.1 à 1.6).

2. Dispositif de machine à onduler destiné à former des tubes ondulés thermoplastiques à partir d'un tuyau de fusion de matière plastique sortant d'un dispositif d'extrusion,
comprenant des mâchoires de moulage (1.1 à 1.6) guidées en carrousel dans un tronçon de moulage linéaire (10), qui agencées l'une derrière l'autre par paires dans le tronçon de moulage (10), forment une conduite de moulage, étant entendu que les paires de mâchoires de moulage sont constituées de mâchoires de moulage (1.1 à 1.6) gauches et droites et enferment entre elles un espace creux de moulage cylindrique de façon à former la conduite de moulage,
comprenant des pinces (2) afin de ramener les mâchoires de moulage (1.1 à 1.6) de la fin du tronçon de moulage (10) au début du tronçon de moulage (10),
comprenant un dispositif de démoulage (3) agencé à la fin du tronçon de moulage (10), qui présente au moins un plateau rotatif (3) entraîné par un moteur et coopère avec la paire de mâchoires de moulage arrivée à la fin du tronçon de moulage (10) en ce qu'il écarte les mâchoires de moulage (1.1 à 1.6) de la paire de mâchoires de moulage l'une de l'autre,
**caractérisé**
**en ce que** le plateau rotatif (3) entraîné par un moteur est réalisé avec un axe de rotation central installé verticalement sur la surface du plateau et au moins un tenon d'entraînement (31, 32), et
**en ce qu'**à la fin du tronçon de moulage (10), un premier plateau rotatif (3) entraîné par un moteur de ce type est agencé avec la surface du plateau dirigée vers le côté inférieur de la paire de mâchoires de moulage située à cet endroit et un deuxième plateau rotatif (3) entraîné par un moteur de ce type est agencé avec la surface du plateau dirigée vers le côté supérieur de cette même paire de mâchoires de moulage, de telle sorte que les premier et deuxième plateaux rotatifs (3) coopèrent en prise depuis le bas et depuis le haut avec les mâchoires de moulage (1.1 à 1.6) de la paire de mâchoires de moulage arrivée en positon finale par le biais de leurs tenons d'entraînement (31), (32) afin de déplacer les mâchoires de moulage vers l'extérieur.

3. Dispositif de machine à onduler selon l'une des revendications précédentes,
**caractérisé**
**en ce qu'**un premier tenon d'entraînement (31) et un deuxième tenon d'entraînement (32) sont agencés sur une première moitié de la surface du plateau et un autre premier tenon d'entraînement (31) et un autre deuxième tenon d'entraînement (32) sont agencés de façon symétrique sur une deuxième moitié de la surface du plateau, et ce de telle sorte que le premier tenon d'entraînement (31) et le deuxième tenon d'entraînement (32) coopèrent de façon synchrone avec les deux mâchoires de moulage (1.1 à 1.6) de la paire de mâchoires de moulage guidée à la fin du petit tronçon de moulage (10).

4. Dispositif de machine à onduler selon la revendication 3,
**caractérisé**
**en ce que** le premier tenon d'entraînement (31) et le deuxième tenon d'entraînement (32) sont agencés sur une ligne de jonction qui s'étend parallèlement à une ligne de diamètre sur la surface du plateau et s'étend également parallèlement à une deuxième ligne de jonction de l'autre premier tenon d'entraînement (31) et de l'autre deuxième tenon d'entraînement (32) sur la surface du plateau, étant entendu que la distance entre la première ligne de jonction et la ligne de diamètre est égale à la distance entre la deuxième ligne de jonction et la ligne de diamètre.

5. Dispositif de machine à onduler selon l'une des revendications précédentes,
**caractérisé**
**en ce que** les deux premiers tenons d'entraînement (31) sont agencés de façon inversée l'un par rapport à l'autre autour de l'axe de rotation central et en ce que les deux deuxièmes tenons d'entraînement (32) sont agencés de façon inversée l'un par rapport à l'autre autour de l'axe de rotation central.

6. Dispositif de machine à onduler selon l'une des revendications précédentes,
**caractérisé**
**en ce que** le plateau rotatif (3) est entraîné en alternance dans le sens des aiguilles d'une montre et dans le sens contraire aux aiguilles d'une montre.

7. Dispositif de machine à onduler selon la revendication 6,
**caractérisé**
**en ce que** le plateau rotatif (3) est entraîné en alternance dans le sens des aiguilles d'une montre et dans le sens contraire aux aiguilles d'une montre avec à chaque fois un angle de rotation de 90°.

8. Dispositif de machine à onduler selon l'une des revendications précédentes,
**caractérisé**
**en ce qu'**une baguette de guidage linéaire escamotable (3v) est agencée dans la zone de la fin du tronçon de moulage linéaire (10) dans une position parallèle décalée par rapport à l'axe longitudinal du tronçon de moulage linéaire (10).

9. Dispositif de machine à onduler selon l'une des revendications précédentes,
**caractérisé**
**en ce qu'**il est monté en aval du plateau rotatif (3) un dispositif de cale comprenant une surface de cale, qui est agencé de telle sorte que la surface de cale coopère avec la mâchoire de moulage (1.1 à 1.6) en prise avec le plateau rotatif (3) en ce que la mâchoire de moulage glisse sur la surface de cale.

10. Dispositif de machine à onduler selon la revendication 9,
**caractérisé**
**en ce que** le dispositif de cale présente deux surfaces de cale agencées dans un angle symétriquement par rapport à l'axe longitudinal du tronçon de moulage (10), étant entendu qu'une surface de cale est agencée de telle sorte qu'elle coopère avec la mâchoire de moulage (1.1 à 1.6) en prise avec le plateau rotatif (3) et que l'autre surface de cale est agencée de telle sorte qu'elle coopère avec l'autre mâchoire de moulage (1.1 à 1.6) en prise avec le plateau rotatif (3).
